Europäisches Patentamt

European Patent Office

Office européen des brevets

(11) Publication number: 0 275 931 A2

# (12) EUROPEAN PATENT APPLICATION

(21) Application number: 88100479.0

(22) Date of filing: 14.01.88

(51) Int. Cl.⁴: G05D 16/06 , F25B 41/06

(30) Priority: 21.01.87 JP 9843/87

(43) Date of publication of application:
27.07.88 Bulletin 88/30

(84) Designated Contracting States:
DE FR GB

(71) Applicant: HITACHI, LTD.
6, Kanda Surugadai 4-chome Chiyoda-ku
Tokyo 100(JP)

(72) Inventor: Oguni, Kensaku
694-2, Minamiyabe
Shimizu-shi(JP)
Inventor: Kuroda, Sigeaki
412-3, Shimono
Shimizu-shi(JP)
Inventor: Yasuda, Hiromu
335-106, Yoichiuemonshinden
Shizuoka-shi(JP)
Inventor: Terada, Hirokiyo
615-159, Shimojima
Shizuoka-shi(JP)
Inventor: Maeda, Eiji
88-20, Kitawaki
Shimizu-shi(JP)

(74) Representative: Finck, Dieter et al
Patentanwälte v. Füner, Ebbinghaus, Finck
Mariahilfplatz 2 & 3
D-8000 München 90(DE)

(54) Expansion valve.

(57) An expansion valve incorporated in the refrigerant circuit of, for example, a refrigerator and adapted for controlling the flow rate of the refrigerant in said refrigerant circuit. The expansion valve has a pressure chamber (2) formed in the valve body (1) and adapted for receiving the discharge pressure of the refrigerant circuit, a deflectable partition member (8) disposed in the pressure chamber (2) and presenting a pressure-receiving surface (8a) at the free end thereof, an electric actuator (21) connected to the surface of the pressure-receiving surface (8a) opposite to the pressure-receiving surface (8a) through a compression spring (13), a needle (15) connected to the pressure-receiving surface (8a) and adapted to cooperate with an orifice (16) which provides a communication between two valve chambers (3a, 3b) in the valve body (1), and a controller for operating the electric actuator (21) in accordance with the temperature of the refrigerant gas in the compressor discharge side of the refrigerant cycle, whereby the needle (15) operates in response to the displacement of the partition member (8) which is caused in accordance with changes in the temperature and the pressure of the refrigerant gas in the compressor discharge side of the refrigerant circuit, whereby the degree of opening of the orifice (16) is changed to control the degree of superheating of the refrigerant at the discharge side of the compressor.

# F I G. 1

1a.

## EXPANSION VALVE

The present invention relates to an expansion valve which is incorporated in a refrigerant circuit of a refrigerator, air-conditioner and so forth to control the flow rate of the refrigerant. More particularly, the invention is concerned with an electrically actuated expansion valve which is suitable for controlling the degree of superheat of the refrigerant discharged from the compressor.

In general, a refrigeration circuit is composed of a compressor, a condenser, an expansion valve and an evaporator. An expansion valve, which is capable of controlling the degree of superheating of the refrigerant discharged from the compressor, is disclosed in Japanese Unexamined Patent Publication No. 54-34159.

A system also is disclosed in Japanese Unexamined Utility Model Publication No. 55-143470 in which the temperature ($t_d$) of the refrigerant gas discharged from the compressor and the saturation temperature ($t_c$) of the refrigerant in the condenser are detected and the degree of opening of an expansion valve is controlled such that the degree of superheating $SH_d$ ($= t_d - t_c$) is maintained constant.

On the other hand, electrically actuated expansion valves, which are to be substituted for conventional thermal expansion valve capable of controlling the degree of superheat at the compressor inlet side, have been disclosed in Japanese Unexamined Patent No. 59-170667 and in the specification of the United States Patent No. 4,362,027.

The expansion valve disclosed in the abovementioned Japanese Unexamined Patent Publication No. 54-34159 employs a feeler bulb charged with a gas and adapted to change the pressure of this gas in response to a change in the temperature of the refrigerant gas discharged from the compressor. The expansion valve also has a spring which urges a valve member against the pressure of the refrigerant gas flowing through the expansion valve. The degree of opening of the expansion valve is determined by the balance of pressure between the force produced by the refrigerant gas, the force produced by the pressure of the gas in the feeler bulb and the spring force. Thus, it is no obtainable from this known expansion valve to forcibly change the degree of opening.

In the expansion valve disclosed in Japanese Unexamined Utility Model Publication No. 55-143470, which is controlled by the superheating degree of the gas discharged from the compressor, the saturation temperature corresponding to the discharge pressure is obtained by measuring the temperature of the refrigerant in the condenser or by computing the saturation temperature from the discharge pressure. This expansion valve, therefore, is costly to detect the saturation temperature.

The expansion valve disclosed in Japanese Unexamined Patent No. 59-170667 and the specification of the United States Patent No. 4,362,027 makes it reference only to control the degree of superheating at the suction side of the compressor.

Accordingly, an object of the present invention is to provide an expansion valve which is capable of controlling the superheating degree of the refrigerant at the discharge side of the compressor without requiring detection of saturation temperature of the refrigerant.

To this end, according to the present invention, there is provided an expansion valve incorporated in a refrigerant circuit, including a valve body having a first valve chamber, a first communication port opening to the first valve chamber and leading from a refrigerant line, a second valve chamber, a second communication port opening to the second valve chamber and leading to another refrigerant line, an orifice which provides a communication between the first and second valve chambers, and a needle arranged to oppose the orifice, the expansion valve comprising: a pressure chamber formed in the valve body and adapted to receive the discharge pressure of the refrigerant circuit, a deflectable partition member disposed in the pressure chamber and provided on the free end thereof a pressure receiving surface to which is connected the needle, an electric actuator provided outside the pressure chamber, a first compression spring contacting at its one side with the rear side of the pressure-receiving surface and connected at its other end to the electric actuator, a sensor for sensing the temperature of the refrigerant gas in the compressor discharge side of the refrigerant circuit, and a controller for controlling the output of the electric actuator in accordance with the signal from the sensor, whereby the deflectable partition member deflects in accordance with the temperature and the pressure of the refrigerant gas in the compressor discharge side of the refrigerant circuit, so as to actuate the needle with the deflection of the partition member to control the opening degree of the orifice.

The electric actuating force for deflecting the deflectable partition member is produced in accordance with a formula which is determined on the basis of the detected discharge gas temperature, and is exerted through the intermediary of a spring. The pressure of the refrigerant discharged from the compressor is applied to the deflectable partition member in the opposite direction of the electric actuating force, so that the degree of opening of the expansion valve is controlled by the balance between forces acting on both sides of the deflectable partition, whereby the superheating degree of the refrigerant is controlled.

According to the invention, therefore, the expansion valve for controlling the superheating degree of the discharge gas is provided so that the superheating degree can be controlled in accordance with the relationship between the detected temperature and the discharge pressure, without requiring the detection of the saturation temperature.

Conveniently said deflectable partition member is a bellows having one end fixed to a wall of said pressure chamber and closed at its free end by a disk to provide said pressure-receiving surface.

Said electric actuator can be a pulse motor having a driving screw screwed into a wall of said valve body and engaging with a spring seat on which said first compression spring is seated.

Alternatively, said electric actuator can be a piezoelectric element having a driving shaft extending through a wall of said valve body and engaging with a spring seat on which said first compression spring is seated.

It is convenient that a third spring seat is arranged on said pressure-receiving surface of said partition member, said needle being fixed through a valve rod to said third spring seat, and said third spring seat is pressed onto said pressure-receiving surface of said deflectable partition member by a second compression spring.

Preferably said expansion valve is connected to the discharge pipe of said compressor and selectively connectable to one side of said indoor heat exchanger and one side of said outdoor heat exchanger through a four-way valve, the other side of said indoor heat exchanger being connected to said second communication port while the other side of said outdoor heat exchanger is connected to said first communication port of said expansion valve, said expansion valve further comprising a branch pipe branching from said discharge pipe and leading to a pressure introduction port communicating with the interior of said expansion valve and a temperature sensor on said discharge pipe, said sensor being connected to said controller which in turn is connected to said electric actuator.

A preferred embodiment of the present invention will be described with reference to the drawings.

Fig. 1 is a longitudinal sectional view of an embodiment of the expansion valve in accordance with the present invention;

Fig. 2 is a block diagram of a refrigeration cycle incorporating the expansion valve shown in Fig. 1;

Fig. 3 is a diagram illustrating the degree of opening of the expansion valve;

Fig. 4 is a longitudinal sectional view of an alternate embodiment of the expansion valve;

Fig. 5 is a diagram illustrating the relationship between temperature and pressure of refrigerant, which relation being input to an electric actuating portion; and

Fig. 6 is a typical diagram of the refrigerant circuit on a Mollier chart.

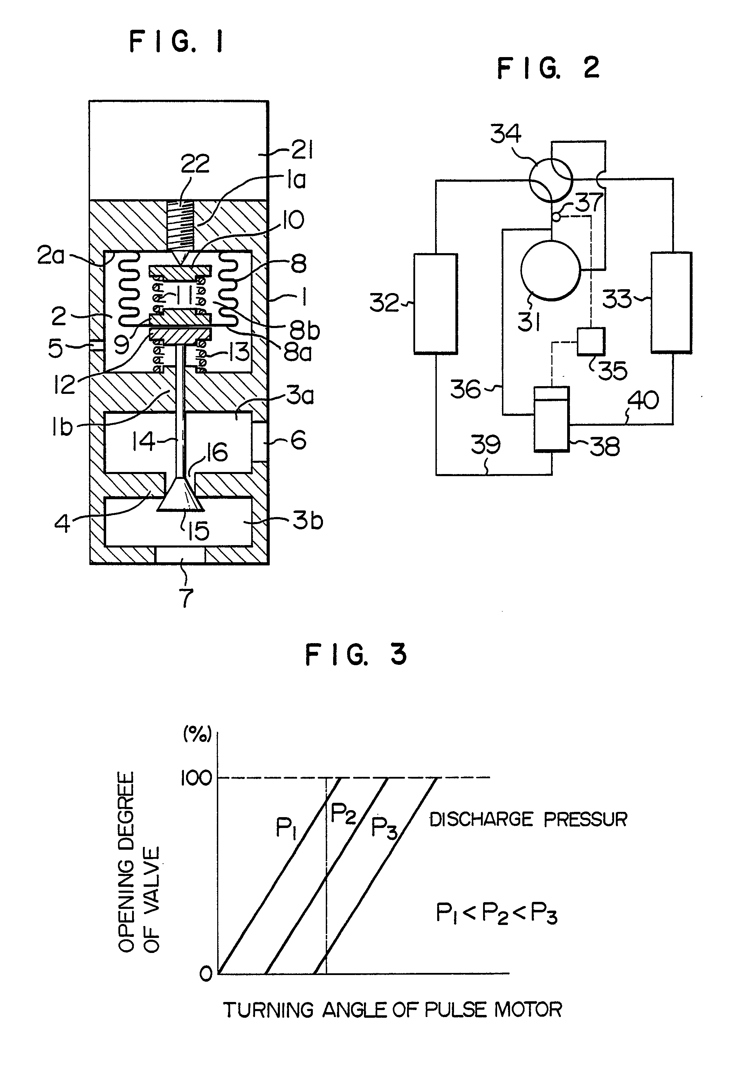

Fig. 1 is a sectional view of an expansion valve embodying the present invention. The expansion valve has a valve body 1 in which are formed a pressure chamber 2 and a valve chamber. The valve chamber has a valve seat wall 4 which separates a first valve chamber 3a and a second valve chamber 3b. A pressure introduction port 5 opens into the pressure chamber 2. First communication port 6 and second communication port 7 open to the first valve chamber 3a and the second valve chamber 3b, respectively. The pressure chamber 2 has a wall 2a to which is fixed a deflectable partition member which is, in the illustrated embodiment, a bellows 8. The end surface of the deflectable partition member opposite to the wall 2a constitutes a pressure-receiving surface 8a. The interior 8b of the bellows 8 is opened to the atmosphere. A first spring seat 9 is provided on the rear surface of the pressure-receiving surface 8a in the interior 8b of the bellows 8. A first compression spring 11 is loaded between the first spring seat 9 and a second spring seat 10. An electric actuator, which is a pulse motor 21 in the illustrated embodiment, is provided outside the valve body 1. The pulse motor 21 has a driving screw 22 projecting therefrom and screwed into the wall 1a of the valve body 1. The end of the driving screw 22 presses the above-mentioned second spring seat 10. A third spring seat 12 is disposed so as to oppose to the pressure-receiving surface 8a of the bellows 8. A second compression spring 13 is loaded between a wall 1b and the third spring seat 12 so as to press the third spring seat 12 onto the pressure receiving surface. A valve rod 14, which is provided at its one end with a needle 15, is extended through the wall 1b. The needle 15 is disposed such as to oppose to an orifice 16 which is formed in the valve seat wall 4. Thus, the orifice 16 is adapted to be opened and closed by the needle 15 in accordance with the axial movement of the valve rod 14.

Fig. 2 shows the arrangement of components of a heat-pump type refrigeration cycle in which is incorporated the expansion valve shown in Fig. 1. The refrigeration cycle includes a compressor 31, an indoor heat-exchanger 32, an outdoor heat exchanger 33, a four-way valve 34, a controller 35, a discharge pressure introduction pipe 36, a discharge gas temperature detecting thermistor 37, and an expansion valve 38 as shown in Fig. 1. The refrigeration cycle further has a pipe 36 for introducing the pressure of the discharge gas and connected to the pressure introduction port 5, a pipe 39 leading from the indoor heat exchanger 32 and connected to the second communication port 7, as well as a pipe 40 leading from the outdoor heat exchanger 33 and connected to the first communication port 6.

Fig. 3 shows the opening degree characteristics of the expansion valve. The operation of the expansion valve will be described hereinafter with reference to Figs. 1 and 3.

Referring to Fig. 1, as the pulse motor 21 operates forwardly, the driving screw 22 rotates to urge the second spring seat 10 downward, whereby the first compression spring 11 is compressed to generate a force which acts to push the bellows 8 downward. As a result, a downward force is applied to the third valve seat 12 and the valve rod 14 thereby moving the needle 15 downward, whereby the degree of opening of the expansion valve is increased.

Referring now to Fig. 3, when the discharge pressure P acting on the bellows 8 is constant, the opening degree of the expansion valve is increased as the amount of forward operation of the pulse motor i.e., the turning angle of the shaft of the motor, is increased.

When the discharge pressure acting on the bellows 8 is increased, the upward force exerted on the bellows 8 is increased correspondingly, so that the needle 15 is raised to reduce the valve opening. In the arrangement shown in Fig. 3, therefore, the opening degree of the valve is decreased as the discharge pressure is increased, provided that the turning angle of the pulse motor is the same, as shown by one-dot-and-dash line in Fig. 3.

Although a specific embodiment of the invention has been described as to the characteristic of the operation, the same result can be obtained by various other forms of the expansion valve as follows.

For instance, the electric actuator, which is a pulse motor in the embodiment shown in Fig. 1, may be substituted by another type of actuator such as a D.C. motor having a function for detecting the turning angle.

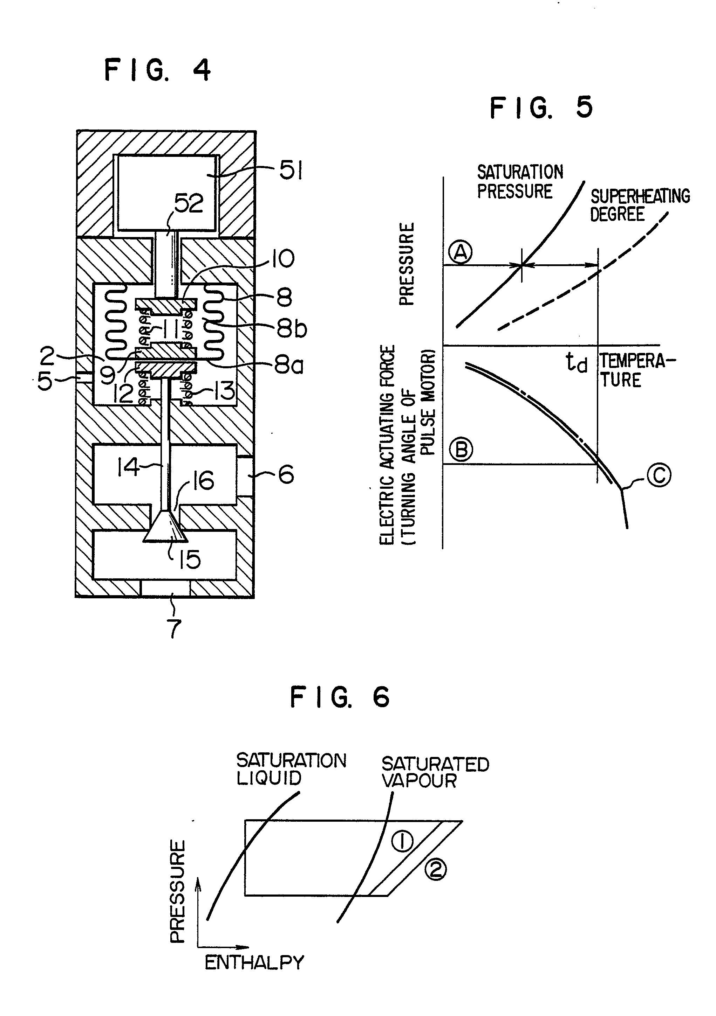

Fig. 4 shows an embodiment in which a piezoelectric element is used as the electric actuator. This embodiment has a piezoelectric element 51 and a driving shaft 52. The amount of deflection of the piezoelectric element 51 is increased as the voltage applied thereto is increased. As the voltage applied to the piezoelectric element 51 is increased, the driving shaft 52 is moved downward so as to load the spring 11, thereby urging the bellows 8 downward. In consequence, the needle 15 is lowered to increase the opening degree of the valve. Other portions are materially the same as those in the first embodiment, so that they are denoted by the same reference numerals and detailed description thereof is omitted.

The embodiment shown in Fig. 4 may be embodied by using a solenoid coil as an electric actuator. The deflectable partition member may be composed of a member other than the bellows used in the described embodiment, e.g., a diaphragm.

A description will be made hereinafter as to an control system applied the expansion valve of the present invention to the refrigerant circuit of a heat-pump type air conditioner.

Fig. 5 illustrates the relationship between the temperature and pressure, as well as the relationship between the temperature and the electric actuating force. In the upper part of Fig. 5, a full-line curve shows the relationship between the pressure and the temperature of a refrigerant used in the air conditioner, in the saturated state of the refrigerant, while a broken-line curve shows the relationship between the pressure and the temperature of the discharged gas in the design specification. Thus, the value of difference between the full-line curve and the broken-line curve illustrate the design degree of superheat. The relationship between the discharged gas temperature and the electric actuating force is shown in the lower part of Fig. 5. This relationship is corresponded to one between the temperature of discharged gas and the turning angle of the pulse motor in the present embodiment. This relationship is stored in a controller 35. The temperature of the discharged gas is detected by a thermistor 37 (see Fig. 2) and the controller 35 commands a turning angle of the pulse motor determined in accordance with the curve shown in the lower part of Fig. 5. For instance, when the discharge gas temperature is raised, the turning angle of the pulse motor is increased with the result that the valve opening is increased as shown in Fig. 3.

The operation of this refrigerant circuit is as follows.

Referring to Fig. 2, during operation of the refrigerant cycle in the air heating mode, the refrigerant recycles through the compressor 31, the four-way valve 34, the indoor heat exchanger 32, the expansion valve 38, the outdoor heat exchanger 33, the four-way valve 34 and the compressor 31. It is assumed here that the heat pump operates under a certain operating condition in the air heating mode and the operation is settled at the discharge pressure Ⓐ and the pulse motor angle Ⓑ in Fig. 5. If the outdoor air temperature is raised to cause a rise in the air temperature supplied to the outdoor heat exchanger 33 for operating as an evaporator, the degree of superheat at the refrigerant outlet of the outdoor heat exchanger 33 is increased. Fig. 6 shows the refrigerant cycle on a typical Mollier chart. When the temperature of the air supplied to the evaporator is raised, the state of the refrigerant changes from the state shown by ① to the state shown by ② in Fig. 6. The rise in the temperature of the discharged gas increases the turning angle of the pulse motor, as will be seen from Fig. 5, so that the degree of opening of the expansion valve is increased to increase the flow rate of the refrigerant supplied to the outdoor heat exchanger 33, thereby reducing the degree of superheat of the refrigerant at the outlet side of the outdoor heat exchanger 33. This obviously causes the temperature of the discharged gas to be lowered.

Although the operation has been described with specific reference to the air heating mode, it will be clear to those skilled in the art that the same effect can be produced also in the air cooling mode of operation of the refrigeration cycle, though in this case the first communication port 6 and the second communication port 7 of the expansion valve serves as a refrigerant inlet and a refrigerant outlet, respectively.

The relationship between the temperature of the discharged gas and the turning angle of the pulse motor, which is shown in the lower part of Fig. 5, can be optimized from the performance of the heat pump and the reliability. For instance, in order to avoid an abnormal rise in the temperature of the discharge gas, the opening degree characteristic of the expansion valve may be so designed that the degree of opening of the expansion valve is drastically increased when the temperature of the discharged gas is risen beyond a predetermined temperature ⓒ as shown with a dotted and chaine line in Fig. 5.

## Claims

1. An expansion valve (38) incorporated in a refrigerant circuit, including a valve body (1) having a first valve chamber (3a), a first communication port (6) opening to said first valve chamber (3a) and leading from a refrigerant line (40), a second valve chamber (3b), a second communication port (7) opening to said second valve chamber (3b) and leading to another refrigerant line (39), an orifice (16) which provides a communication between said first and second valve chambers (3a, 3b), and a needle (15) arranged to oppose said orifice (16), said expansion valve comprising:

a pressure chamber (2) formed in said valve body (1) and receiving the pressure of a refrigerant at the compressor discharge side of said refrigerant circuit, a deflectable partition member (8) disposed in said pressure chamber (2) and provided on the free end thereof a pressure-receiving surface (8a) to which is connected said needle (15), an electric actuator (21) provided outside said pressure chamber (2), a first compression spring (11) contacting at its one side with the rear side of said pressure-receiving surface (8a) and connected at its other end to said electric actuator (21, 51), a sensor (37) for sensing the temperature of the refrigerant gas in said compressor discharge side of said refrigerant circuit, and a controller (35) for controlling the output of said electric actuator (21) in accordance with the signal from said sensor (37), whereby said deflectable partition member (8) deflects in accordance with the temperature and the pressure of said refrigerant gas in the compressor discharge side of said refrigerant circuit, so as to actuate said needle (15) to control the opening degree of said orifice (16).

2. An expansion valve according to Claim 1, characterized in that said deflectable partition member (8) is a bellows having one end fixed to a wall (2a) of said pressure chamber (2) and closed at its free end by a disk to provide said pressure receiving surface (8a).

3. An expansion valve according to Claim 1, characterized in that said electric actuator (21) is a pulse motor having a driving screw (22) screwed into a wall (2a) of said valve body (1) and engaging with a spring seat (10) on which said first compression spring (11) is seated.

4. An expansion valve according to at least one of the Claims 1 to 3, characterized in that said electric actuator (51) is a piezoelectric element having a driving shaft (52) extending through a wall of said valve body (1) and engaging with a spring seat (10) on which said first compression spring (11) is seated.

5. An expansion valve according to at least one of the Claims 1 to 4, comprising a third spring seat (12) arranged on said pressure-receiving surface (8a) of said deflectable partition member (8), said needle (15) being fixed through a valve rod (14) to said third spring seat (12), and said third spring seat (12) is pressed onto said pressure-receiving surface (8a) of said deflectable partition member (8) by a second compression spring (13).

6. An expansion valve according to at least one of the Claims 1 to 5, characterized in that said expansion valve (38) is connected to the discharge pipe of said compressor (31) and selectively connectable to one side of said indoor heat exchanger (32) and one side of said outdoor heat exchanger (33) through a four-way valve (34), the other side of said indoor heat exchanger (32) being connected to said second communication port (7) while the other side of said outdoor heat exchanger (33) is connected to said first communication port (6) of said expansion valve (38), said expansion valve (38) further comprising a branch pipe (36) branching from said discharge pipe and leading to a pressure introduction port (5) communicating with the interior of said expansion valve (38) and a temperature sensor (37) on said discharge pipe, said sensor (37) being connected to said controller (35) which in turn is connected to said electric actuator (21).

# FIG. 1

# FIG. 2

# FIG. 3

$P_1 < P_2 < P_3$

DISCHARGE PRESSUR

(%)

100

0

OPENING DEGREE OF VALVE

TURNING ANGLE OF PULSE MOTOR

# FIG. 4

51
52
10
8
8b
2
8a
5
9
12
13
14
16
6
15
7

# FIG. 5

SATURATION
PRESSURE

SUPERHEATING
DEGREE

PRESSURE

Ⓐ

$t_d$   TEMPERA-TURE

ELECTRIC ACTUATING FORCE
(TURNING ANGLE OF PULSE MOTOR)

Ⓑ

Ⓒ

# FIG. 6

SATURATION
LIQUID

SATURATED
VAPOUR

PRESSURE

①
②

ENTHALPY